(19) Europäisches Patentamt
European Patent Office
Office européen des brevets

(11) **EP 1 912 800 B1**

(12) **EUROPÄISCHE PATENTSCHRIFT**

(45) Veröffentlichungstag und Bekanntmachung des Hinweises auf die Patenterteilung:
**09.06.2010  Patentblatt 2010/23**

(21) Anmeldenummer: **06775785.6**

(22) Anmeldetag: **02.08.2006**

(51) Int Cl.:
**B60B 27/00** *(2006.01)*    **F16C 19/18** *(2006.01)*

(86) Internationale Anmeldenummer:
**PCT/DE2006/001344**

(87) Internationale Veröffentlichungsnummer:
**WO 2007/014554 (08.02.2007 Gazette 2007/06)**

(54) **RADLAGEREINHEIT**

WHEEL BEARING UNIT

UNITE DE PALIER DE ROUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **04.08.2005  DE 102005036674**

(43) Veröffentlichungstag der Anmeldung:
**23.04.2008  Patentblatt 2008/17**

(73) Patentinhaber: **Schaeffler Technologies GmbH & Co. KG**
**91074 Herzogenaurach (DE)**

(72) Erfinder:
• **NIEBLING, Peter**
**97688 Bad Kissingen (DE)**
• **MASUR, Ernst**
**97508 Untereuerheim (DE)**
• **RUOFF, Gottfried**
**97464 Oberwerrn (DE)**

(56) Entgegenhaltungen:
**DE-A1- 2 329 554     DE-A1- 10 054 421**
**DE-A1- 10 129 709     DE-U1-202004 020 400**

EP 1 912 800 B1

## Beschreibung

## Gebiet der Erfindung

Die Erfindung betrifft eine Radlagereinheit mit wenigstens einem Außenteil, zumindest einem Innenteil und mit wenigstens zwei Reihen Wälzkörpern zwischen dem Außenteil und dem Innenteil, wobei an dem Außenteil jeweils zumindest eine Innenlaufbahn sowie an dem Innenteil jeweils wenigstens eine Außenlaufbahn für die Wälzkörper einer Reihe ausgebildet ist.

## Hintergrund der Erfindung

Bekannte Radlagereinheiten haben ein relativ hohes Gewicht und eine relativ geringe Lagersteifigkeit. Die Lagersteifigkeit ist dabei der Widerstand, den die Einheit gegen durch Belastungen hervorgerufene elastische Auslenkungen aufbringt. Aus der Lagersteifigkeit resultier eine Kippsteifigkeit, die sich aus dem Verhältnis von Momenten aus Belastungen zu dem Kippwinkel im Lager, z.B. in Nm/°, ergibt.

Die Kippsteifigkeit ist umso geringer, um so mehr das Lager bei Belastungen verkippt, d.h. umso größer der Kippwinkel bei gleicher Belastung ist. Die Belastungen sind die Belastungen, die im wesentlichen im Betriebszustand eines Fahrzeuges auf ein Fahrzeugrad und die dazugehörigen Radaufhängung wirken.

Je geringer die Lagersteifigkeit, umso mehr bewirken die Belastungen Verkippungen des Radsystems, die sich nachteilig auf das Fahrverhalten des Fahrzeuges, insbesondere bei Kurvenfahrt, und sich über eine große axiale Bremsscheibenauslenkung, insbesondere im Bereich der Bremsscheiben, auch nachteilig auf den Verschleiß der Bremse und die Funktion der Bremse auswirken.

Aus der gattungsgemäßen DE 20 2004 020 400 U1 (D1) ist eine Radlagereinheit bekannt, die wenigstens ein Außenteil, ein Innenteil und wenigstens zwei Wälzkörperreihen aufweist. Für den Verzahnungsdurchmesser der Innenverzahnung wird ein Wert von 42 mm angegebenen und für die Lagerbreite einen Wert von 40,45 mm.

Aus DE 23 29 154 (D2) ist eine Lageranordnung für eine antreibbare Radnabe eines Motorfahrzeugs bekannt. Es wird ein zweireihiges Kugellager offenbart, welches mit einer über ein homokinetisches Gelenk antreibbaren Radnabe versehen ist.

Aus DE 20 2004 020 400 U1 (D1) ist eine Radlagereinheit bekannt, die wenigstens ein Außenteil, ein Innenteil und wenigstens zwei Wälzkörperreihen aufweist. Für den Verzahnunasdurchmesser der Innenverzahnung wird ein Wert von 42 mm angegebenen und für die Lagerbreite einen Wert von 40,45 mm.

Aus DE 23 29 154 (D2) ist eine Lageranordnung für eine antreibbare Radnabe eines Motorfahrzeugs bekannt. Es wird ein zweireihiges Kugellager offenbart, welches mit einer über ein homokinetisches Gelenk antreibbaren Radnabe versehen ist.

Die Aufgabe der Erfindung ist es daher, eine Radlagereinheit mit einer hohen Lagersteifigkeit zu schaffen,

Diese Aufgabe wird durch die Radlageeinheit mit den Merkmalen gemäß dem unabhängigen Anspruch gelöst.

Die Radlagereinheit (1) weist wenigstens ein Außenteil (8), zumindest ein

Die Innenverzahnung ist für einen Eingriff in eine Außenverzahnung eines Antriebszapfens o.ä. vorgesehen.

Die Radnabe ist rotationsfest mit der Außenlaufbahn zumindest gekoppelt, d.h. beispielsweise, entweder die Radnabe ist das Innenteil selbst und weist dann mindestens eine der Laufbahnen auf oder wenigstens ein Innenring sitzt als Innenteil auf der Radnabe.

Die erfindungsgemäße Radlagereinheit ist **dadurch gekennzeichnet, dass** das Verhältnis Durchmesser $d_Z$ eines Kopfkreises der Innenverzahnung zu Lagerbreite $b_L$ des Außenteils größer als 0,9 ist, d.h.

$$d_Z / b_L > 0,9$$

zu folgenden, den Erfindungsgegenstand nicht einschränkenden, erklärenden Randbedingungen:

-   Die axiale Lagerbreite des Außenteiles ist durch den größten mit der Rotationsachse gleichgerichteten und zur Rotationsachse parallelen Abstand zwischen den zwei am weitesten in die gleiche Richtung voneinander entfernten Punkten der Außenkontur des Außenteiles ausgebildet, wobei Punkte vorzugsweise an den voneinander abgewandten und zumeist ringförmig ausgebildeten Stirnseiten des Außenringes ausgebildet sind.

-   Die axiale Lagerbreite des Außenteiles kann größer oder kleiner als die des Innenteils sein.

-   Der Teilkreis einer Reihe Wälzkörper der Radlagereinheit ist der gedachte Kreis, dessen Mittelpunkt senkrecht von der Rotationsachse der Radlagereinheit durchstoßen ist, und der die Zentren der Wälzkörper der Reihe umfangsseitig schneidet bzw. miteinander verbindet.

-   Das Innenteil ist mindestens ein Innenring mit mindestens einer der Laufbahnen, ist wahlweise zwei Innenringe in einer Einheit mit einer Nabe o.ä., auf der der Innenring sitzt, oder

-   das Innenteil ist eine Nabe o.ä. an der zumindest eine der Laufbahnen direkt, und somit ohne Zwischenschaltung eines Innenringes, ausgebildet ist

- Das Außenteil ist mindestens ein Außenring, der zu einer Einheit mit einem Außengehäuse montiert ist. Das Außengehäuse ist beispielsweise ein Radträger und weist Befestigungselemente zur fahrzeugseitigen Befestigung auf, oder

- das Außenteil ist das Außengehäuse und weist mindestens eine der Laufbahnen auf, und ist somit ohne Zwischenschaltung eines Außenringes ausgebildet.

- Im Falle von Radlagereinheiten, insbesondere bei nicht angetriebenen Achsen/Rädern; deren Radnaben keine Innenverzahnung aufweisen, ist erfindungsgemäß - für das Verhältnis - anstelle des Durchmessers $d_Z$ des Kopfkreises der Innenverzahnung ein entsprechender Innendurchmesser der Radnabe anzusetzen.

Den abhängigen Ansprüchen sind jeweils bevorzugte, vorteilhafte und nicht triviale Weiterbildungen des erfinderischen Gegenstandes gemäß dem unabhängigen Anspruch zu entnehmen.

So kann weiterbildend vorgesehen sein, dass das Verhältnis von Durchmesser $T_K$ Teilkreis einer Reihe Wälzkörper der Radlagereinheit zum Durchmesser $d_K$ der Wälzkörper größer als der Zahlenwert 6, kurz 6, ist sowie dass ein Reihenabstand $r_L$ zwischen zwei axial zueinander benachbarten Reihen der Wälzkörper (d.h. der axiale Mittenabstand von Mitte Wälzkörper der einen Reihe zu Mitte Wälzkörper der benachbarten Reihe) höchstens dem 1,65 - fachen des Durchmessers $d_K$ der Wälzkörper entspricht.

Somit ist:

$$T_K > 6 \cdot d_K$$

$$r_L <= 1,65 \cdot d_k$$

zu folgenden, nicht einschränkenden, erklärenden Randbedingungen:

- Das Verhältnis gilt bei Radlagereinheiten, bei denen sich die Durchmesser der Teilkreise von Reihe zu Reihe unterscheiden, für die Reihe mit dem kleinsten Teilkreisdurchmesser.

- Das Verhältnis gilt für Radlagereinheiten, bei denen die Durchmesser der Teilkreise von Reihe zu Reihe gleich sind, sich jedoch die Durchmesser der Wälzkörper von Reihe zu Reihe unterscheiden, für die Reihe, deren Wälzkörper den größten Durchmesser aufweisen.

- Das Verhältnis gilt für Radlagereinheiten zur Lagerung von nicht angetriebenen oder angetriebenen Rädern. Angetriebene Räder sind z.B. mit dem Gelenkaußenteil eines Gleichlaufgelenks gekoppelt, wie gelenkte Räder an Fahrzeugen mit Frontantrieb oder angetriebene Räder an Hinterachskonstruktionen.

- Das Verhältnis gilt für einreihige, insbesondere zweireihige und mehrreihige Kugel- oder Rollenlager, insbesondere für Kugellager, von denen in der Regel das Innenteil mit dem Fahrzeugrad verbunden und das Außenteil fahrzeugseitig über Radträger bzw. Achsschenkel fest ist.

Mit der Wahl des Verhältnisses sowie des Reihenabstandes wird von der in der Fachwelt vorherrschenden Meinung abgewichen, dass die Abmessungen von Radlagereinheiten möglichst klein gewählt werden müssen.

Durch den größeren Wälzkörperteilkreis ergibt sich bei gleicher statischer Tragzahl $C_0$ gegenüber einem Lager des Standes der Technik aus

$$C_0 = f_0 \cdot i \cdot z \cdot d_K^2 \cdot \cos \alpha_0$$

eine größere Anzahl Kugeln pro Reihe des erfindungsgemäßen Lagers, insbesondere dann, wenn der Kugeldurchmesser $d_K$ so klein wie möglich gewählt wird. Es sind

  $f_0$ = von der Lagerbauart abhängiger Faktor
  $i$ = Anzahl der Reihen Wälzkörper
  $\alpha_0$ = Lagerdruckwinkel
  $z$ = Anzahl der Wälzkörper.

Die Steifigkeit ist von Faktoren, wie dem Elastizitätsmodul des Wälzlagermaterials, der Schmiegung der Laufbahn und im hohen Maße von der Anzahl der Wälzkörper sowie von dem Durchmesser der Wälzkörper, abhängig.

So ergibt sich beispielsweise für ein Lager mit einem Durchmesser des Teilkreises von $T_K$ = 64 bis 65 mm und für z = 14 Wälzkörper mit $d_K$ = 12,7 mm in einem Lager nach dem Stand der Technik eine geringere Steifigkeit als eine vorteilhaft höhere Steifigkeit, die sich für die erfindungsgemäße Radiagereinheit mit gleichem Teilkreisdurchmesser und für z = 21 mit $d_K$ = 11,112 mm ergibt.

Die Lagersteifigkeit, die sich durch die Erfindung oder deren Weiterbildungen um ca. 40% gegenüber dem Stand der Technik deutlich erhöht, führt zur erhöhten Lagerkippsteifigkeit. Die erhöhte Lagerkippsteifigkeit führt zu geringeren belastungsabhängigen Verformungen an der Radlagereinheit und somit zu geringeren Verformungen an den Bremsscheiben.

Weiterhin kann weiterbildend vorgesehen sein, dass die axiale Lagerbreite $b_L$ des Außenteils höchstens dem Vierfachen des Durchmessers des kleinsten tragenden Wälzkörpers der Radlagereinheit entspricht. Somit ist:

$$b_L <= 4 \cdot d_k$$

zu folgenden Randbedingungen:

- Die axiale Lagerbreite des Außenteiles ist durch den größten mit der Rotationsachse gleichgerichteten und zur Rotationsachse parallelen Abstand zwischen den zwei am weitesten in die gleiche Richtung voneinander entfernten Punkten der Außenkontur des Außenteiles ausgebildet, wobei Punkte vorzugsweise an den voneinander abgewandten und zumeist ringförmig ausgebildeten Stirnseiten des Außenringes ausgebildet sind.

- Die axiale Lagerbreite des Außenteiles kann größer oder kleiner als die des Innenteils sein.

Schließlich ist mit einer Ausgestaltung der Erfindung vorgesehen, dass der Lagerquerschnitt $q_L$ höchstens dem 2 fachen des Durchmessers der kleinsten Wälzkörper der Radlagereinheit entspricht. Somit ist:

$$q_L <= 2\, d_k$$

zu folgenden Randbedingungen:

- Der Lagerquerschnitt ist durch den radialen Abstand zwischen der Lagerbohrung, beschrieben mit dem Innendurchmesser $d_L$ (freier Innendurchmesser des Innenteils), und durch den Durchmesser $D_A$ des Außenteils (Lageraußendurchmesser) oder bei einem nicht rotationssymmetrischen Außenteil, durch den kleinsten radialen Abstand $D_A$ von zwei sich an der Rotationsachse einander gegenüberliegen Punkten $P_1$ und $P_2$ der Außenkontur des Außenteils bestimmt und ergibt sich aus

$$2q_L = D_A - d_L$$

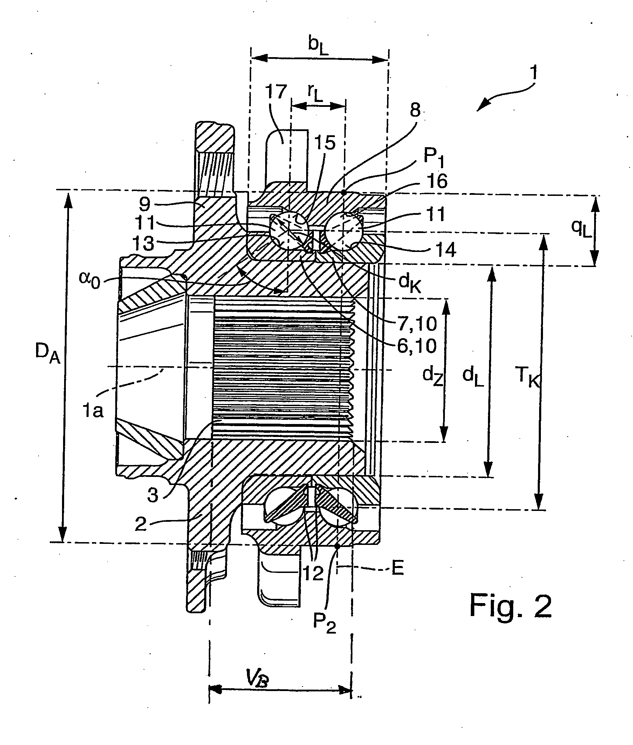

Die Punkte $P_1$ und $P_2$ liegen dabei in einer gemeinsamen durch die Zentren der Wälzkörper einer der Reihen verlaufenden Radialebene E. Die Radialebene E verläuft durch die Reihe, über der der kleinste radiale Abstand $D_A$ ausgebildet ist. In dem Beispiel nach Figur 2 ist dies für die Radlagereinheit 1 nach Figur 2 die in der Zeichnung rechte Reihe.

Weitere Ausgestaltungen der Erfindung sehen vor, dass

- das Verhältnis Innenringsitzdurchmesser $d_L$ zu Lagerbreite $b_L$ größer als 1,25 ist, d.h.

$$d_L / b_L > 1{,}25,$$

- das Verhältnis Innenringsitzdurchmesser $d_L$ zu Durchmesser der Wälzkörper $d_K$ größer als 4,2 ist, d.h.

$$d_L / d_K > 4{,}2,$$

- das Verhältnis Innenringsitzdurchmesser $d_L$ zu Reihenabstand der Wälzkörperreihen $r_L$ größer als 3 ist, d.h.

$$d_L / r_L > 3,$$

- das Verhältnis Innenringsitzdurchmesser $d_L$ zu Lagerquerschnitt $q_L$ größer als 2,2 ist, d.h.

$$d_L / q_L > 2{,}2,$$

- das Verhältnis Verzahnungsdurchmesser $d_Z$ zu Reihenabstand der Wälzkörperreihen $r_L$ größer als 2,3 ist, d.h.

$$d_Z / r_L > 2{,}3,$$

- das Verhältnis Verzahnungsdurchmesser $d_Z$ zu Wälzkörperdurchmesser $d_K$ größer als 3,2 ist, d.h.

$$d_Z / d_K > 3{,}2,$$

- das Verhältnis Verzahnungsdurchmesser $d_Z$ zu Verzahnungsbreite $V_B$ größer als 0,9 ist, d.h.

$$d_Z / V_B > 0{,}9,$$

- das Verhältnis Lageraußendurchmesser $D_A$ zu Verzahnungsdurchmesser $d_Z$ kleiner als 2,7 ist, d.h.

$$D_A / d_Z < 2{,}7.$$

In Figuren 1 bis 2 sind Ausführungsbeispiele der Erfindung dargestellt, welche im Weiteren näher erläutert werden.

Es zeigen

Figur 1 eine Bemassung für eine Radlagereinheit mit Verhältnisanga- ben gemäß einem Ausführungsbeispiel der Erfindung;

Figur 2 eine Radlagereinheit für eine getriebene Achse gemäß einem Ausführungsbeispiel der Erfindung;

**Beschreibung der Zeichnungen**

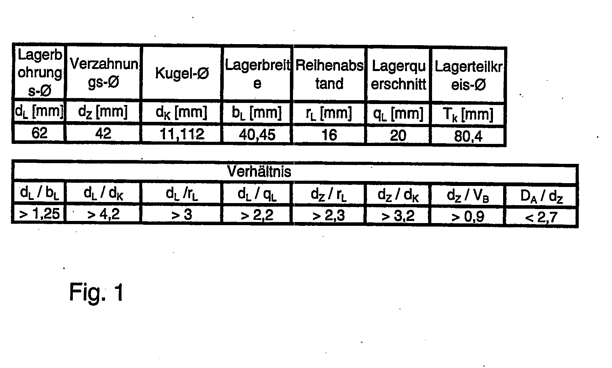

Fig.1 zeigt in tabellarischer Form eine beispielhafte Bemassung einer Radlagereinheit mit (Geometrie-)Verhältnissen, angegeben als - allgemeine - Mindest- bzw. Maximalverhältnisse, die bis zu dem Zeitpunkt, an dem die Erfindung gemacht wurde, an Radlagereinheiten des Standes der Technik nicht verwirklicht sind und welche durch die beispielhafte Bemassung erfüllt sind.

Figur 2 zeigt ein Ausführungsbeispiel der Erfindung, bei dem eine Radlagereinheit 1 eine Radnabe 2 mit einer Innenverzahnung 3 aufweist, mit Angabe der für die Erfindung wesentlichen Kenngrößen. Die Darstellung ist in einem Längsschnitt entlang der Rotationsachsen 1 a der Radlagereinheiten 1 und nicht maßstäblich.

Die Innenverzahnung 3 an der Radnabe 2 ist für den Eingriff in eine Außenverzahnung eines nicht dargestellten Antriebszapfens vorgesehen. Die Radnabe 2 ist drehbar in dem Außenteil 8 gelagert und weist einen Flansch 9 für das Befestigen eines nicht dargestellten Fahrzeugrades und einer Bremsscheibe auf. Auf der Radnabe 2 sitzen die Innenteile 10 in Form von Innenringen 6 und 7, die jeweils eine Außenlaufbahn 13 bzw. 14 für den Wälzkontakt mit jeweils einer Reihe Wälzkörpern 11 in Form von Kugeln aufweisen. Die Wälzkörper 11 einer Reihe sind in einem Käfig 12 geführt. Das Außenteil 8 ersetzt als Flanschkörper den oder die klassischen Außenringe und weist dazu die Innenlaufbahnen 15 bzw. 16 für den Wälzkontakt mit den Wälzkörpern 11 auf. Das Außenteil 8 ist mit einem Flansch 17 zur fahrzeugseitigen Befestigung der Radlagereinheit 1 versehen.

**Bezugszeichen**

1 Radlagereinheit
1a Rotationsachse
2 Radnabe
3 Innenverzahnung
5 Radnabe

6 Innenring
7 Innenring
8 Außenteil
9 Flansch
10 Innenteil
11 Wälzkörper
12 Käfig
13 Außenlaufbahn
14 Außenlaufbahn
15 Innenlaufbahn
16 Innenlaufbahn
17 Flansch

$\alpha_0$ Lagerdruckwinkel
$b_L$ Lagerbreite
$D_A$ Lageraußendurchmesser, ra- dialer Abstand
$d_K$ Durchmesser Wälzkörper
$d_L$ Innendurchmesser Innenteil
$d_Z$ Durchmesser Kopfkreis
$q_L$ Lagerquerschnitt
$E$ Radialebene
$P_1$ Punkt der Außenkontur
$P_2$ Punkt der Außenkontur
$r_L$ Reihenabstand
$T_K$ Durchmesser Teilkreis
$V_B$ Verzahnungsbreite

**Patentansprüche**

1. Radlagereinheit (1) mit wenigstens einem Außenteil (8), mit zumindest einem Innenteil (10) und mit wenigstens zwei Reihen Wälzkörpern (11) zwischen dem Außenteil (8) und dem Innenteil, wobei an dem Außenteil (8) jeweils zumindest eine Innenlaufbahn (15, 16) sowie an dem Innenteil (10) jeweils wenigstens eine Außenlaufbahn (13, 14) für die Wälzkörper (11) einer Reihe ausgebildet ist und wobei eine Radnabe (2) eine radial nach innen in Richtung einer Rotationsachse (1 a) hervorstehende Innenverzahnung (3) für einen Eingriff in eine Außenverzahnung an einem Antriebszapfen aufweist und rotationsfest mit der Außenlaufbahn zumindest gekoppelt ist, wobei

   - das Verhältnis Verzahnungsdurchmesser $d_Z$ eines Kopfkreises der Innenverzahnung (3) zu Lagerbreite $b_L$ des Außenteils (8) größer als 0,9 ist und **dadurch gekennzeichnet, dass**
   - das Verhältnis Verzahnungsdurchmesser $d_Z$ zu Verzahnungsbreite $V_B$ größer als 0,9 ist.

2. Radlagereinheit (1) nach Anspruch 1, **dadurch gekennzeichnet, dass** ein Verhältnis von Durchmesser ($T_K$) Teilkreis zumindest einer Reihe der Radlagereinheit (1) zum Durchmesser ($d_k$) der Wälzkörper (11) der jeweiligen Reihe größer als der Zahlenwert Sechs ist, wobei der Teilkreis ein gedachter und zur Rotationsachse (1a) der Radlagereinheit (1) konzentrischer Kreis ist, der die Zentren der Wälzkörper (11) einer Reihe umfangsseitig miteinander verbindet und der Reihenabstand ($r_L$) zwischen den Reihen höchstens dem 1,65 -fachen des Durchmessers ($d_k$) der Wälzkörper (11) entspricht, wobei der Reihenabstand ($r_L$) der mit der Rotationsachse (1a) gleichgerichtete axiale Abstand ($r_L$) zwischen den Zentren der Wälzkörper (11) ist.

3. Radlagereinheit (1) nach Anspruch 1 oder 2 **dadurch gekennzeichnet, dass** die axiale Lagerbreite ($b_L$) des Außenteiles (8) höchstens dem Vierfachen des Durchmessers ($d_k$) der kleinsten Wälzkörper (11) der Radlagereinheit (1) ist, wobei die axiale Lagerbreite ($b_L$) der mit der Rotationsachse (1a) gleichgerichtete maximale Abstand ($b_L$) zwischen zwei axial am weitesten voneinander entfernten Außenkonturpunkten des Außenteiles (8) ist.

4. Radlagereinheit (1) nach Anspruch 1 oder 2, **dadurch gekennzeichnet, dass** der Lagerquerschnitt höchstens dem 2 - fachen des Durchmessers ($d_k$) der kleinsten Wälzkörper (11) der Radlagereinheit (1) entspricht, wobei der Lagerquerschnitt ($q_L$) der quer zur Rotationsachse (1 a) gerichtete radiale Abstand ($q_L$) ist, der sich aus einer Differenz aus kleinster Außenabmessung des Außenteils (8) und aus freier Innendurchmesser der Lagerbohrung ($d_L$) ergibt und wobei die kleinste Außenabmessung der radiale Abstand zwischen zwei sich an der Rotationsachse in einer gedachten und durch die Zentren der Wälzkörper verlaufenden Radialebene gegenüberliegenden Punkten der Außenkontur ist.

5. Radlagereinheit (1) nach mindestens einem der vorstehenden Ansprüche, **dadurch gekennzeichnet, dass** das Verhältnis Innenringsitzdurchmesser $d_L$ zu Lagerbreite $b_L$ größer als 1,25 ist.

6. Radlagereinheit (1) nach mindestens einem der vorstehenden Ansprüche, **dadurch gekennzeichnet, dass** das Verhältnis Innenringsitzdurchmesser $d_L$ zu Durchmesser der Wälzkörper $d_K$ größer als 4,2.

7. Radlagereinheit (1) nach mindestens einem der vorstehenden Ansprüche, **dadurch gekennzeichnet, dass** das Verhältnis Innenringsitzdurchmesser $d_L$ zu Reihenabstand der Wälzkörperreihen $r_L$ größer als 3 ist.

8. Radlagereinheit (1) nach mindestens einem der vorstehenden Ansprüche, **dadurch gekennzeichnet, dass** das Verhältnis Innenringsitzdurchmesser $d_L$ zu Lagerquerschnitt $q_L$ größer als 2,2 ist.

9. Radlagereinheit (1) nach mindestens einem der vorstehenden Ansprüche, **dadurch gekennzeichnet, dass** das Verhältnis Verzahnungsdurchmesser $d_Z$ zu Reihenabstand der Wälzkörperreihen $r_L$ größer als 2,3 ist.

10. Radlagereinheit (1) nach mindestens einem der vorstehenden Ansprüche, **dadurch gekennzeichnet, dass** das Verhältnis Verzahnungsdurchmesser $d_Z$ zu Wälzkörperdurchmesser $d_K$ größer als 3,2 ist.

11. Radlagereinheit (1) nach mindestens einem der vorstehenden Ansprüche, **dadurch gekennzeichnet, dass** das Verhältnis Lageraußendurchmesser $D_A$ zu Verzahnungsdurchmesser $d_Z$ kleiner als 2,7.

## Claims

1. Wheelbearing unit (1) with at least one outer part (8), with at least one inner part (10) and with at least two rows of rolling bodies (11) between the outer part (8) and the inner part, there being formed on the outer part (8) in each case at least one inner raceway (15, 16) and on the inner part (10) in each case at least one outer raceway (13, 14) for the rolling bodies (11) of a row and a wheel hub (2) having an internal toothing (3), projecting radially inward in the direction of an axis of rotation (1a), for engagement into an external toothing on a drive journal and being at least coupled fixedly in terms of rotation to the outer raceway,

   - the ratio of the diameter $d_Z$ of a tip circle of the internal toothing (3) to the bearing width $b_L$ of the outer part (8) being higher than 0.9, and **characterized in that**
   - the ratio of toothing diameter $d_Z$ to toothing width $V_B$ is higher than 0.9.

2. Wheelbearing unit (1) according to Claim 1, **characterized in that** a ratio of the diameter ($T_K$) of the reference circle of at least one row of the wheelbearing unit (1) to the diameter ($d_K$) of the rolling bodies (11) of the respective row is higher than the numerical value six, the reference circle being an imaginary circle which is concentric to the axis of rotation (1a) of the wheelbearing unit (1) and which connects the centres of the rolling bodies (11) of a row circumferentially to one another, and the row spacing ($r_L$) between the rows corresponds at most to 1.65 times the diameter ($d_K$) of the rolling bodies (11), the row spacing ($r_L$) being the axial spacing ($r_L$), codirectional with the axis of rotation (1a), between the centres of the rolling bodies (11).

3. Wheelbearing unit (1) according to Claim 1 or 2, **characterized in that** the axial bearing width ($b_L$) of the outer part (8) is at most four times the diameter ($d_K$) of the smallest rolling bodies (11) of the wheelbearing unit (1), the axial bearing width ($b_L$) being the maximum spacing ($b_L$), codirectional with the axis of rotation (1a), between two outer contour points of the outer part (8) which are furthest away from one another axially.

4. Wheelbearing unit (1) according to Claim 1 or 2, **characterized in that** the bearing cross section corresponds at most to twice the diameter ($d_K$) of the smallest rolling bodies (11) of the wheelbearing unit (1), the bearing cross section ($q_L$) being the radial spacing ($q_L$) which is directed transversely to the axis of rotation (1a) and which arises from a difference of the smallest outer dimension of the outer part (8) and of the free inside diameter of the bearing bore ($d_L$), and the smallest outer dimension being the radial spacing between two points of the outer contour which lie opposite one another on the axis of rotation in an imaginary radial plane running through the centres of the rolling bodies.

5. Wheelbearing unit (1) according to at least one of the preceding claims, **characterized in that**

   - the ratio of inner ring seat diameter $d_L$ to bearing width $b_L$ is higher than 1.25.

6. Wheelbearing unit (1) according to at least one of the preceding claims, **characterized in that**

   - the ratio of inner ring seat diameter $d_L$ to diameter of the rolling bodies $d_K$ is higher than 4.2.

7. Wheelbearing unit (1) according to at least one of the preceding claims, **characterized in that**

   - the ratio of inner ring seat diameter $d_L$ to row spacing of the rolling body rows $r_L$ is higher than 3.

8. Wheelbearing unit (1) according to at least one of the preceding claims, **characterized in that**

   - the ratio of inner ring seat diameter $d_L$ to bearing cross section $q_L$ is higher than 2.2.

9. Wheelbearing unit (1) according to at least one of the preceding claims, **characterized in that**

   - the ratio of toothing diameter $d_Z$ to row spacing of the rolling body rows $r_L$ is higher than 2.3.

10. Wheelbearing unit (1) according to at least one of the preceding claims, **characterized in that**

   - the ratio of toothing diameter $d_Z$ to rolling body diameter $d_K$ is higher than 3.2.

11. Wheelbearing unit (1) according to at least one of the preceding claims, **characterized in that**

   - the ratio of bearing outside diameter $D_A$ to toothing diameter $d_Z$ is lower than 2.7.

**Revendications**

1. Unité de palier de roue (1) comprenant au moins une partie extérieure (8), au moins une partie intérieure (10) et au moins deux rangées de corps de roulement (11) entre la partie extérieure (8) et la partie intérieure, à chaque fois au moins une piste de roulement interne (15, 16) étant réalisée sur la partie extérieure (8) et à chaque fois au moins une piste de roulement externe (13, 14) étant réalisée sur la partie interne (10), pour les corps de roulement (11) d'une rangée, et un moyeu de roue (2) présentant une denture interne (3) saillant radialement vers l'intérieur dans la direction d'un axe de rotation (1a) pour un engagement dans une denture externe sur un tourillon d'entraînement et étant au moins accouplé de manière solidaire en rotation avec la piste de roulement externe,

   - le rapport entre le diamètre de la denture $d_Z$ d'un cercle de tête de la denture interne (3) et la largeur du palier $b_L$ de la partie externe (8) étant supérieur à 0,9 et
   **caractérisée en ce que**
   - le rapport entre le diamètre de la denture $d_Z$ et la largeur de la denture $V_B$ est supérieur à 0,9.

2. Unité de palier de roue (1) selon la revendication 1, **caractérisée en ce qu'**un rapport entre le diamètre ($T_K$) du cercle partiel d'au moins une rangée de l'unité de palier de roue (1) et le diamètre ($d_k$) des corps de roulement (11) de la rangée respective est supérieur à six en valeur absolue, le cercle partiel étant un cercle imaginaire et concentrique à l'axe de rotation (1a) de l'unité de palier de roue (1), qui relie ensemble les centres des corps de roulement (11) d'une rangée du côté périphérique, et la distance de rangée ($r_L$) entre les rangées correspond au maximum à 1,65 fois le diamètre ($d_k$) des corps de roulement (11), la distance de rangée ($r_L$) étant la distance ($r_L$) axiale entre les centres des corps de roulement (11) orientée dans le même sens que l'axe de rotation (1a).

3. Unité de palier de roue (1) selon la revendication 1 ou 2, **caractérisée en ce que** la largeur de palier axiale ($b_L$) de la partie externe (8) est au maximum le quadruple du diamètre ($d_k$) des plus petits corps

de roulement (11) de l'unité de palier de roue (1), la largeur de palier axiale (b_L) étant la distance (b_L) maximale orientée dans le même sens que l'axe de rotation (1a) entre deux points du contour extérieur de la partie externe (8) espacés axialement au maximum l'un de l'autre.

**4.** Unité de palier de roue (1) selon la revendication 1 ou 2, **caractérisée en ce que** la section transversale du palier correspond au maximum à 2 fois le diamètre (d_k) des plus petits corps de roulement (11) de l'unité de palier de roue (1), la section transversale de palier (q_L) étant la distance (q_L) radiale orientée transversalement à l'axe de rotation (1a), qui est obtenue par la différence entre la dimension externe la plus petite de la partie externe (8) et le diamètre intérieur libre de l'alésage de palier (d_L), et la dimension externe la plus petite étant la distance radiale entre deux points du contour externe opposés sur l'axe de rotation dans un plan radial imaginaire et s'étendant à travers les centres des corps de roulement.

**5.** Unité de palier de roue (1) selon au moins l'une quelconque des revendications précédentes, **caractérisée en ce que** le rapport entre le diamètre du siège de la bague interne d_L et la largeur de palier b_L est supérieur à 1,25.

**6.** Unité de palier de roue (1) selon au moins l'une quelconque des revendications précédentes, **caractérisée en ce que** le rapport entre le diamètre du siège de la bague interne d_L et le diamètre des corps de roulement d_K est supérieur à 4,2.

**7.** Unité de palier de roue (1) selon au moins l'une quelconque des revendications précédentes, **caractérisée en ce que** le rapport entre le diamètre du siège de la bague interne d_L et la distance de rangée des rangées de corps de roulement r_L est supérieur à 3.

**8.** Unité de palier de roue (1) selon au moins l'une quelconque des revendications précédentes, **caractérisée en ce que** le rapport entre le diamètre du siège de la bague interne d_L et la section transversale du palier q_L est supérieur à 2,2.

**9.** Unité de palier de roue (1) selon au moins l'une quelconque des revendications précédentes, **caractérisée en ce que** le rapport entre le diamètre de la denture d_Z et la distance de rangée des rangées de corps de roulement r_L est supérieur à 2,3.

**10.** Unité de palier de roue (1) selon au moins l'une quelconque des revendications précédentes, **caractérisée en ce que** le rapport entre le diamètre de la denture d_Z et le diamètre des corps de roulement d_K est supérieur à 3,2.

**11.** Unité de palier de roue (1) selon au moins l'une quelconque des revendications précédentes, **caractérisée en ce que** le rapport entre le diamètre extérieur du palier D_A et le diamètre de la denture d_Z est inférieur à 2,7.

| Lagerbohrungs-Ø | Verzahnungs-Ø | Kugel-Ø | Lagerbreite | Reihenabstand | Lagerquerschnitt | Lagerteilkreis-Ø |
|---|---|---|---|---|---|---|
| $d_L$ [mm] | $d_Z$ [mm] | $d_K$ [mm] | $b_L$ [mm] | $r_L$ [mm] | $q_L$ [mm] | $T_k$ [mm] |
| 62 | 42 | 11,112 | 40,45 | 16 | 20 | 80,4 |

| Verhältnis | | | | | | | |
|---|---|---|---|---|---|---|---|
| $d_L / b_L$ | $d_L / d_K$ | $d_L / r_L$ | $d_L / q_L$ | $d_Z / r_L$ | $d_Z / d_K$ | $d_Z / V_B$ | $D_A / d_Z$ |
| > 1,25 | > 4,2 | > 3 | > 2,2 | > 2,3 | > 3,2 | > 0,9 | < 2,7 |

Fig. 1

Fig. 2

## IN DER BESCHREIBUNG AUFGEFÜHRTE DOKUMENTE

**In der Beschreibung aufgeführte Patentdokumente**

- DE 202004020400 U1
- DE 2329154